(19) Europäisches Patentamt
European Patent Office
Office européen des brevets

(11) **EP 1 082 601 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(21) Anmeldenummer: **99936304.7**

(22) Anmeldetag: **25.05.1999**

(51) Int Cl.$^7$: **G01N 21/55**, G01N 21/43, G01N 21/03, G01N 13/00

(86) Internationale Anmeldenummer:
**PCT/DE1999/001529**

(87) Internationale Veröffentlichungsnummer:
**WO 1999/061896 (02.12.1999 Gazette 1999/48)**

(54) **DURCHFLUSS-SCHERANALYSATOR FÜR BIOLOGISCH AKTIVE MOLEKÜLE IN FLÜSSIGKEITSSCHICHTEN AUF OBERFLÄCHEN, VERFAHREN ZUR ANALYSE EINER FLÜSSIGKEIT UND VERFAHREN ZUR BESTIMMUNG DER DICKE EINER ULTRADÜNNEN FLÜSSIGKEITSSCHICHT**

FLOW-THROUGH SHEAR ANALYZER FOR BIOLOGICALLY ACTIVE MOLECULES IN LIQUID LAYERS ON SURFACES, METHOD OF ANALYSING A LIQUID AND METHOD OF DETERMINING THE THICKNESS OF AN ULTRA THICK LIQUID LAYER

ANALYSEUR DE CISAILLEMENT DE FLUX PASSANT POUR MOLECULES BIOLOGIQUEMENT ACTIVES SE TROUVANT DANS DES COUCHES DE LIQUIDE SUR DES SURFACES, PROCEDE D'ANALYSE D'UN LIQUIDE ET PROCEDE DE DETERMINATION DE L'EPAISSEUR D'UNE COUCHE DE LIQUIDE ULTRA MINCE

(84) Benannte Vertragsstaaten:
**AT BE CH CY DE DK ES FI FR GB GR IE IT LI LU MC NL PT SE**

(30) Priorität: **25.05.1998 DE 19823301**

(43) Veröffentlichungstag der Anmeldung:
**14.03.2001 Patentblatt 2001/11**

(73) Patentinhaber: **Jennissen, Herbert P.**
**45279 Essen (DE)**

(72) Erfinder:
• **JENNISSEN, Herbert, Peter**
**D-45279 Essen (DE)**

• **ZUMBRINK, Thomas**
**D-40882 Ratingen (DE)**

(74) Vertreter: **Viering, Jentschura & Partner**
**Centroallee 263**
**46047 Oberhausen (DE)**

(56) Entgegenhaltungen:
**EP-A- 0 378 968        US-A- 4 608 344**
**US-A- 4 810 658**

• **DATABASE WPI Section EI, Week 199826 Derwent Publications Ltd., London, GB; Class S03, AN 1998-296073 XP002121515 -& RU 2 095 787 C (MOSC CLINICAL RES INST) , 10. November 1997 (1997-11-10)**

**Beschreibung**

Die vorliegende Erfindung betrifft einen Durchfluß-Scheranalysator mit Mitteln für eine rasche Durchmischung und die Erzeugung ultradünner Flüssigkeitsschichten mit den Merkmalen des Hauptanspruches zur Messung insbesondere der adsorptionsdesorptions- und reaktionskinetischen Eigenschaften von biologisch aktiven Molekülen an Oberflächen sowie Verfahren zur Bestimmung dieser Eigenschaften.

Oberflächen treten in heterogenen Systemen auf, in denen beispielsweise mehrere Phasen mit reinen Oberflächen aneinander stoßen, wobei die einzelnen Komponenten durch eine Grenzfläche geschieden werden. Betrachtet man die grenznahe Ausdehnung einer Phase auf einer Oberfläche, so spricht man von einer Grenzschicht. Bei der Anreicherung beispielsweise von Proteinen in einer Grenzschicht an einer Oberfläche, die durch nichtkovalente Bindungskräfte bewirkt wird, spricht man von Adsorption (bei einer Abreicherung von Desorption), Vorgänge, die durch Sorptionskinetiken charakterisiert sind. In Folgereaktionen an der Oberfläche, in deren Verlauf das Protein Konformationsänderungen oder Strukturänderungen (Primärstruktur) durchmachen kann, Bindungen mit Liganden eingeht oder aber kovalente Bindungen mit der Oberfläche geknüpft werden - Vorgänge, die durch Reaktionskinetiken charakterisiert sind - findet die Adsorptionsreaktion häufig ihren Abschluß.

Das Verhalten von biologisch bedeutsamen Molekülen, beispielsweise von Proteinmolekülen, an Oberflächen ist wichtig bei der Beurteilung von Vorgängen in der Biologie, der Biochemie, beim Einsatz von Biosensoren und bei der Beurteilung von biomedizinischen Materialien. Dabei sind die Eigenschaften der Oberflächen bei chromatographischen Verfahren, bei Biosensoren und die Biokompatibilität der Implantate von der Bindungsfähigkeit der Proteine und ihrer Liganden an die Oberfläche abhängig. Bei Biosensoren kann aus der Bindung von Proteohormonen an besonderen Oberflächen auf die Hormonkonzentration im Blut geschlossen werden, bei Implantaten dagegen kann die Ablagerung von Plasmaproteinen an dem Fremdmaterial zur Entstehung von Thrombosen und der Aktivierung des Komplements führen.

Für die direkten Online-Messungen der Wechselwirkung von Proteinen und deren Liganden mit Oberflächen wird im Stand der Technik beispielsweise die Oberflächen-Plasmonresonanz, die Interferometrie, die Ellipsometrie, die Reflektometrie oder bevorzugt die totale interne Reflektionsfluoreszenz-Technik ("total internal reflection fluorescence" - TIRF) verwendet, bei der ausgenutzt wird, daß ein einfallender Lichtstrahl an einer Grenzschicht zwischen einem optisch dichteren Medium (beispielsweise ein Feststoff) und einem optisch dünneren Medium (beispielsweise einer Flüssigkeit) total reflektiert wird, wenn der Einfallswinkel größer als der kritische Winkel für das optisch dichtere Medium ist. Am Reflektionspunkt im optisch dichteren Medium tritt eine senkrecht zur Oberfläche des dichteren Mediums stehende Welle der gleichen Frequenz wie die Frequenz des einfallenden Lichtes auf (sog. evaneszente Welle), die sich in das dünnere Medium ausbreitet. Die Amplitude der evaneszenten Welle nimmt dabei exponentiell im optisch dünneren Medium ab. Die Durchdringungstiefe dieser in die Untersuchungslösung austretenden evaneszenten Welle ist abhängig von der Wellenlänge und im allgemeinen geringer als 200-300 nm, jedoch ausreichend tief, um Fluorophore in der Nähe der Grenzfläche anzuregen, wobei eine Anregung des größten Teils der in der Lösung (Bulklösung) befindlichen Proteine vermieden wird.

Bei Verwendung einer Anregungswellenlänge von 290 nm ist es möglich, den Tryptophanchromophor in einem Protein selektiv anzuregen, der ein Fluoreszenzmaximum bei 350 nm besitzt. Anderseits ist es auch möglich, über chemische Modifikation einen zusätzlichen Fluorophor in das Protein einzubringen, wobei jedoch die Gefahr der konformationellen Änderungen der Struktur des Proteins besteht.

Nach der Durchmischung der Probe in der Probenkammer hängt die gemessene Adsorptionsrate des Proteins an der Oberfläche ohne oder bei nur geringer Strömung von drei unterschiedlichen Schritten ab: 1. dem Massentransport des Proteins in die zwischen Flüssigkeit und Festkörperoberfläche ausgebildete Grenzschicht, 2. der intrinsischen Bindungsgeschwindigkeit und 3. der intrinsischen Dissoziationsgeschwindigkeit. Wenn die Bindungsgeschwindigkeit sehr niedrig ist, wie es bei z.B. sehr niedrigen Oberflächenkonzentrationen der Bindungsstellen für das Protein am Feststoff der Fall ist, wird keine Verarmung an Protein in der Grenzschicht auftreten, und die Adsorptionsgeschwindigkeit wird nur von der intrinsischen Bindungsgeschwindigkeit abhängen.

In vielen Fällen ist jedoch die Bindungsgeschwindigkeit höher als die Transportgeschwindigkeit, so daß die Diffusion nicht ausreichend ist, die Konzentration an Protein in der Grenzschicht auf einem bestimmten Niveau zu halten, was die Gesamtreaktion von dem Massentransport abhängig macht. Das bedeutet, daß die Adsorptionsrate beispielsweise stark vom Rühren abhängig ist.

Es tritt auch der Fall ein, daß die Durchmischungsgeschwindigkeit der Probe im Aufnahmevolumen der Probenkammer kleiner ist als die Transportgeschwindigkeit oder die Bindungsgeschwindigkeit, und daß sie somit geschwindigkeitsbestimmend für die Adsorptionsrate des Proteins wird. Eine einfache Lösung für die Reduktion der bei 2-8 s liegenden Durchmischungszeiten in Probenkammern von 100-200 μl Volumen wurde im dem Stand der Technik bisher nicht gefunden.

Im Stand der Technik wurden einige Lösungsansätze zum Messen der adsorptionskinetischen Daten veröffentlicht, die versuchen, dem Massentransport Rechnung zu tragen. Der Massentransportkoeffizient (Km), der als Km = D/d (D = Diffusionskonstante, d = Schichtdicke) definiert ist, liegt bei einer nicht gerührten Schichtdicke von 10 µm beispielsweise für Fibrinogen bestenfalls bei $2 \times 10^{-6}$ m/s und führt zu einer deutlichen Transportlimitierung. Wenn man jedoch ein direktes kinetisches Signal ohne den störenden Einfluß des Massentransportes erhalten will, muß man die Dicke der nicht gerührten Schichtdicke reduzieren und dies in einem solchen Ausmaß, daß die Adsorptionsrate unabhängig von dem Massentransport durch die Schicht wird. Für das letztgenannte Problem sind im Stand der Technik bis jetzt keine Lösungen vorgeschlagen worden.

Die Aufgabe der Erfindung besteht nun darin, ein Meßsystem und Meßverfahren bereitzustellen, mit dem adsorptions-, desorptions- oder reaktionskinetische Meßwerte für biologisch aktive Moleküle ohne den störenden Einfluß sowohl der Durchmischung als auch des Massentransports gemessen werden können.

Seitens der Erfinder wurde nun überraschend gefunden, daß diese Aufgaben gelöst werden durch Bereitstellung (1) eines Durchfluß-Scheranalysators gemäß dem Anspruch 1.

Mit Hilfe des erfindungsgemäßen Analysators ist es nach kürzester Durchmischung möglich, in einer extrem dünnen Schichtdicke die Sorptions- und Reaktionsgeschwindigkeitskonstanten von biologischen aktiven Molekülen wie Proteinen und deren Liganden gegenüber Oberflächen zu bestimmen, wobei die Oberflächen mit verschiedensten anorganischen, organischen oder biologischen Molekülen oder Materialien mit Hilfe von chemischen oder physikalischen Verfahren oder einer Kombinationen dieser Verfahren modifiziert oder beschichtet sein können, um die Adsorptions- Desorptions- oder Reaktionscharakteristika der biologisch aktiven Moleküle in Bezug auf Affinität oder Spezifität der Bindung zu steuern.

Unter biologisch aktiven Molekülen wird erfindungsgemäß jede Art von Molekülen einschließlich monomerer oder polymerer Biomoleküle sowie deren Liganden verstanden, die in irgendeiner Weise eine biologische Aktivität entfalten. So kann es sich bei den biologisch aktiven Verbindungen beispielsweise um Proteine, Pharmazeutika oder andere in irgendeiner Weise in einem Biosystem wirksame chemische oder biochemische Verbindungen handeln. Entscheidend ist allerdings, daß die Verbindungen in jedem Fall auf der Oberfläche oder in der Grenzfläche durch signalgebende Eigenschaften einer Detektion zugänglich sind. Dies kann der Fall sein beispielsweise durch hervorgerufene Veränderungen in der Oberflächen-Plasmonresonanz, des Oberflächeninterferenzspektrums, des Brechungsindexes, der Oberflächenreflektion, der Drehung der Polarisationsebene des Lichtes, oder vorzugsweise durch Veränderungen in der von den Molekülen ausgehenden Strahlung, die beispielsweise durch Anregung eines im Molekül vorhandenen Chromophors beispielsweise mit Licht oder durch Markierung des biologisch aktiven Moleküls mit einem radioaktiven Isotop erzeugt wird. Dabei sollten durch Markieren oder Einbringen beispielsweise eines Chromophors in das biologisch aktive Molekül die Adsorptionscharakteristika möglichst unverändert gegenüber dem nicht markierten Zustand bleiben.

Falls bevorzugt zur Analyse der von den biologisch aktiven Molekülen emittierten Strahlung das TIRF-Verfahren erfindungsgemäß verwendet wird, weist die Strahlungsanalyseeinheit z.B. eine optische Einheit aus einer Lichtquelle, die einen monochromatischen Lichtstrahl liefert, einen Strahlungsleiter, z.B. ein optisches Prisma und einen Strahlungsanalysator, z.B. einen Emissionsmonochromator mit angeschlossener Auswertungseinheit auf, wobei das Prisma und die Lichtquelle derart zueinander angeordnet sind, daß der aus der Lichtquelle austretende Lichtstrahl über das auf der lichtdurchlässigen Quarzplatte optisch gekoppelt angeordnete Prisma in einem Winkel der größer als der kritische Winkel für das dichtere Medium ist, auf die Grenzschicht zwischen Quarzplatte und Lösung auftrifft, und das gebildete Fluoreszenzlicht, das an der Grenzschicht zwischen Quarzplatte und Probenflüssigkeit in der Probenkammer erzeugt wird und im wesentlichen lotrecht zur Oberfläche der Quarzplatte austritt, über ein optisches System in den Emissionsmonochromator geleitet wird.

Um die gewünschte dünne Schichtdicke zu erzielen, sind erfindungsgemäß Mittel zur Erzeugung von Scherkräften und Spaltdrucken vorgesehen, die im Inneren der Probenkammer auf die Oberfläche der Quarzplatte wirken. Dabei können diese Scherkräfte erfindungsgemäß mechanisch erzeugt werden. Im einfachsten Fall können die Scherkräfte durch einen Volumenstrom durch die Kammer oder aber durch die Drehung eines zylindrischen Rotors in unmittelbarer Nähe zur Meßfläche erzeugt werden. Auf diese Weise erzeugte Scherraten liegen beispielsweise in der Größenordnung von $10^4$ - $10^5$ s$^{-1}$, führen zu Flüssigkeitsschichten von 5-15 µm Dicke und fördern den Einsatz der erfindungsgemäßen Mittel zur Erzeugung ultradünner Schichten sowie der Fortbewegung der erzeugten Schichten.

Die entscheidende Verringerung der Schichtdicke unter 5 µm wird erfindungsgemäß dadurch möglich, daß mittels einer zuleitungsseitig angeordneten Vorrichtung Volumeneinheiten in der Größenordnung von 10-100%, vorzugsweise 50-75%, des Kammervolumens aus einem mit der Kammerlösung nicht mischbaren Fluid in Volumenstromsegmente mit vorzugsweise gleichem Volumen in die Kammerlösung zugespeist werden, die als Mittel dienen, das Flüssigkeitsvolumen in der Meßzelle und die Flüssigkeitsschicht auf der Meßfläche extrem zu reduzieren. Bei der Kammerlösung kann es sich um eine hydrophile, wäßrige oder aber auch um eine hydrophobe, organische Flüssigkeit handeln, wobei das nicht mischbare Fluid so beschaffen ist, das es im ersten Fall nicht mit der hydrophilen und im zweiten Fall nicht mit der hydrophoben Flüssigkeit mischbar ist. Vorzugsweise handelt es sich bei der Kammerlösung um eine Pufferlösung hydrophiler, wäßriger Art. Vorzugsweise erfolgt die Anordnung so, daß eine Volumeneinheit des vorgenannten Fluids direkt vor der Zugabe einer Analysenlösung in die durch die Probenkammer geleitete Pufferlösung eingebracht wird und so durch Verdrängung des Flüssigkeitsvolumens das wirksame Kammervolumen und somit die Durchmischungszeit reduziert, die Probenkammer freispült, und der Spaltdruck zwischen Fluid und Probenkammerwand dabei eine extrem dünne Flüssigkeitsschicht zwischen 10 und 300 nm erzeugt, die keine meßbare Transportbarriere mehr darstellt, da sich der Massentransportkoeffizient beispielsweise für Fibrinogen um mehrere Größenordnungen auf $10^{-4}$ bis $10^{-2}$ m/s erhöht.

Bei dem in die Pufferlösung eingebrachten Fluid kann es sich beispielsweise um ein Gas oder eine mit der Pufferlösung nicht mischbare Flüssigkeit handeln. Bevorzugt ist die Verwendung von Gas, im einfachsten Fall von Luft. Bei der Verwendung von Gas als nicht mischbarem Fluid kann eine einzelne Gasblase bei Einbringen in die Zuführung je nach Strömungsbedingungen in der Zuleitung in eine Reihe von kleineren Gasblasen nach Art einer "Perlenschnur" zerrissen werden. Ferner ist es bei der Verwendung von Gas als nicht mischbarem Fluid auch möglich, die Schichtdicke zwischen Gasblase und Probenkammerwand in der Probenkammer dadurch zu verringern, daß der Druck unter dem das Gas in die Zuleitung eingebracht wird, erhöht wird. Dabei wird der erfindungsgemäße Durchfluß-Scheranalysator bevorzugt als ein geschlossenes System ausgebildet, d.h. im Leitungssystem des Analysators wird ein gegenüber dem Außendruck erhöhter Druck aufrecht erhalten.

Die Zuführung des Fluids zuleitungsseitig in die Zuleitung für die Pufferlösung kann beispielsweise über ein Zweiwegeventil erfolgen, das jeweils einen Anschluß für die Zuführung der Pufferlösung und das Fluid sowie eine Abführung des gebildeten Volumenstromes zur Probenkammer aufweist. Die Zuführung des Fluids kann kontinuierlich oder diskontinuierlich erfolgen, wobei bei letzterer Möglichkeit z.B. über die Stellung des Zweiwegeventils zwischen der Zuleitung der Pufferlösung und des Fluids hin und her geschaltet wird.

In der einfachsten Ausführung des Scheranalysators handelt es sich um ein geschlossenes System und bei der Probenkammer um eine Durchflußküvette mit einem senkrecht zur Flußrichtung rechteckigen oder kreisförmigen Querschnitt, die beispielsweise in einen Probenkammerblock eingesetzt ist und an deren Wandabschnitt die Strahlungsanalyseeinheit, z.B. die optische Einheit zur Leitung und Messung der von den Molekülen emittierten Strahlung angeordnet ist. Bei einem Kammervolumen von 100-200 µl kann das Durchflußvolumen Werte von 1-1000 ml/Std., vorzugsweise 150-200 ml/Std. annehmen, wobei Scherraten bis zu einer Größenordnung von $10^4$ s$^{-1}$ oder darüber entstehen können. Zuleitungsseitig wird eine definierte Volumeneinheit eines nicht mischbaren Fluids vor der zu analysierenden Probe zugespeist als Mittel zur Reduktion der Flüssigkeit in der Kammer und somit der Durchmischungszeit, insbesondere aber zur Erzeugung einer extrem dünnen Flüssigkeitsschicht. Bevorzugt ist eine kontinuierliche Durchströmung unter Erzeugung einer konstanten Scherrate (vorzugsweise 500-1000 s$^{-1}$) in einer Richtung, unter Bewegung der ultradünnen Flüssigkeitsschicht durch den Flüssigkeitsstrom in den TIRF-Meßbereich hinein, wobei die Temperatur konstant zu halten ist. Die biologisch aktiven Moleküle werden im Bereich der fest/flüssig Grenzfläche an der Quarzglaswand der Probenkammer adsorbiert und durch die optische Einheit am Analysator detektiert.

Sollen sehr schnelle relaxationskinetische Experimente durchgeführt werden, wird bei hoher Durchflußgeschwindigkeit eine Volumeneinheit des nicht mischbaren Fluids vor der Analysenlösung in einem kontinuierlichen Strom in die Probenkammer geleitet. Befindet sich das nicht mischbare Fluidvolumen und somit die extrem dünne Flüssigkeitsschicht vorzugsweise im Bereich des Meßfeldes, wird der Flüssigkeitsstrom augenblicklich angehalten (sog. "stopped flow" oder "stopped-flow concentration jump" Methode), damit die Wechselwirkung des biologisch aktiven Moleküls mit der Oberfläche in Abwesenheit von Scherkräften an einer definierten Stelle der Quarzglaswand vom optischen System aufgenommen werden kann. Im Verlauf eines solchen Experimentes kann es notwendig werden, den Flüssigkeitsstrom in seiner Richtung umzukehren, um beispielsweise im selben Experiment andere Bereiche der extrem dünnen Flüssigkeitsschicht, der Grenzschichten oder der Fluidphase zusätzlich oder bei einer anderen Temperatur einer Messung zuzuführen. Auch läßt sich die Temperatur im Stromstillstand sprunghaft verändern, um "stopped-flow temperature jump" Experimente durchzuführen.

In dem erfindungsgemäßen Durchfluß-Scheranalysator können sich die biologisch aktiven Moleküle nach der Zuführung des nicht mischbaren Fluids in vier Bereichen befinden: (1) in der fest/flüssig Grenzschicht, (2) in der flüssig/Fluid Grenzschicht, (3) in der Flüssigkeitsbulkphase oder (4) der Fluidbulkphase. Im Bereich der durch das vorgenannte Fluid erzeugten ultradünnen Flüssigkeitsschicht sind bei hinreichender Eindringtiefe der evaneszenten Welle Konzentrationsveränderungen der biologisch aktiven Moleküle in allen vier Bereichen einer Messung zugänglich.

In einer anderen bevorzugten Ausführungsform, eines offenen Systems, ist der erfindungsgemäße Analysator derart ausgestaltet, daß weitere Mittel zur Erzeugung der extrem dünnen Flüssgkeitsschichten dadurch ausgebildet sind, daß die Probenkammer in Form einer zylindrischen Rheometerkammer zur Aufnahme von Analyse- bzw. Pufferlösung ausgebildet ist, deren eines Ende von einer lichtdurchlässigen Quarzplatte dicht verschlossen ist, in der ein zylinderförmiger Rotor, bevorzugt aus einem lichtdurchlässigen Material,

drehbar gelagert ist, dessen Außendurchmesser dem Innendurchmesser der Rheometerkammer angepaßt ist, wobei der zylindrische Rotor an der, der Quarzplatte zugewandten Seite kegelförmig ausgebildet ist und die Quarzplatte mit der in der Drehachse des Rotors liegenden Kegelspitze berührt; und die eine Zuleitung und eine Ableitung für die Pufferlösung in die aus Rheometerkammerinnenwänden, Rotorkegel und lichtdurchlässiger Quarzplatte gebildeter Probenkammer, aufweist, und ein Motor zum Antrieb des Rotors vorgesehen ist.

Diese Ausführungsform des erfindungsgemäßen Analysators besitzt dabei als wesentliche Bestandteile die Analysatoreinheit und die optische Einheit, die an die Analysatoreinheit gekoppelt ist. Die Analysatoreinheit weist dabei einen Kammerblock mit einer darin befindlichen zylindrischen Rheometerkammer auf, in der ein Rotor aus einem lichtdurchlässigen Material wie beispielsweise Polymethylmethacrylat drehbar gelagert ist, wobei der Außendurchmesser des Rotors dem Innendurchmesser der zylindrischen Analysatorkammer angepaßt ist.

Das Ende der Analysatorkammer ist von einer lichtdurchlässigen festen Platte, z.B. einer Quarzglasplatte, deren Oberfläche chemisch oder physikalisch modifiziert sein kann, verschlossen, wobei der Rotor an der lichtdurchlässigen Quarzplatte zugewandten Seite kegelförmig ausgebildet ist, und der Rotor mit der Kegelspitze die lichtdurchlässige Quarzplatte berührt und die eigentliche Analysatorkammer bildet. Der Winkel in der Kegelspitze zur Drehachse (Kegelschräge/Drehachse) beträgt dabei etwa 85° bis 89.9°, vorzugsweise 89°, so daß eine Probenkammer mit einem um die Drehachse des Rotors vorhandenen dreieckigen Radialquerschnitt gebildet wird, wobei der Dreieckswinkel an der Kegelspitze etwa 0.1° bis 5°, vorzugsweise 1°, beträgt.

Der Durchmesser der Rheometerkammer bzw. des Rotors, im allgemeinen etwa 2-4 cm, ist dabei so aufeinander in Abhängigkeit von dem zuvor genannten Dreieckswinkel bestimmt, daß sich ein Probenkammervolumen von 10 bis zu 1000 μl, vorzugsweise 50 bis 150, besonders bevorzugt 100-120 μl ergibt. In die Probenkammer wird eine Pufferlösung über eine Zuleitung ein- und über eine Ableitung abgeleitet, die bevorzugt in der Quarzplatte angeordnet sind. Durch den sich drehenden Konus wird auf der Quarzplatte, auf der das Protein adsorbiert werden soll, ein Scherkraftfeld zur Erzeugung von Scherraten über die in der Probenkammer befindliche Pufferlösung erzeugt, und es ist entsprechend nach Einbringung der zu untersuchenden, das Protein enthaltenden Lösung möglich, die Adsorption des Proteins an die Oberfläche in Abhängigkeit von der Drehzahl des Rotors zu untersuchen.

Dabei ist die Kammer bevorzugt so ausgebildet, daß gleichzeitig, d.h. bei Drehung des Rotors, das Durchflußvolumen (Kammer mit 1°-Winkel) eine Größe zwischen 1 bis 500 ml pro Stunde, vorzugsweise 150 ml/Std., einnehmen kann. Dieser Volumendurchstrom erzeugt zusätzlich eine signifikante Scherrate in einer Größenordnung bis zu $10^4$ s$^{-1}$, so daß ein System entsteht, bei dem die Gesamtscherrate als Summe aus der Scherrate des Durchflusses und der Scherrate der Kegelrotation betrachtet werden kann.

Mit Hilfe der erfindungsgemäßen Vorrichtung und des unter Verwendung der Vorrichtung angewandten Verfahrens ist es möglich, die Proteinadsorption in der fest/flüssig Grenzschicht an der Quarzglasplatte unter genau definierten externen Scherkräften und Schichtdicken zu bestimmen. Die Vorrichtung kann auch verwendet werden, um beispielsweise die Scherbedingungen im Blutstrom in vivo während der Proteinabsorption zu simulieren, und die durch den Fluß induzierte Scherung bei adsorptionschromatographischen Säulen für Proteintrennungen zu analysieren.

In einer bevorzugten Ausführungsform sind die Zuleitung und die Ableitung der Pufferlösung in die Probenkammer in einer Linie mit der Kegelspitze auf der Quarzplatte angeordnet, und weiter bevorzugt ist die Zuleitung in der Nähe der Kegelspitze angeordnet. So kann die Untersuchungslösung an der Stelle der Probenkammer eingebracht werden, an der diese die geringste axiale Ausdehnung besitzt (damit die zu durchdringende Schicht bei der Adsorption der Proteine an die ggf. modifizierte Oberfläche der Quarzplatte eine möglichst geringe Dicke aufweist), und so ist eine möglichst geringe Schichtdicke zur Adsorption der Proteine an die ggf. modifizierte Quarzplatte von den Proteinen zu durchdringen.

Bevorzugt befindet sich die Injektionsöffnung zur Einbringung der Probenlösung in der Zuleitung der Pufferlösung in die Probenkammer, besonders bevorzugt in der Zuleitung in der Nähe der Quarzplatte an der Stelle, wo Quarzplatte und Zuleitung miteinander verbunden sind. Bei Einbringen der Probenlösung, die die zu untersuchenden Proteine enthält, bevorzugt in der Nähe der Drehachse des Rotors, über die Injektionsöffnung mittels einer Pumpe und Zuleitung in die Probenkammer wird die Probenlösung durch die Pufferlösung verdünnt radial und tangential nach außen bewegt und die in der Lösung enthaltenen Proteine kommen dabei mit der ggf. modifizierten Quarzoberfläche in Kontakt und werden adsorbiert.

Von etwa gleich großer Bedeutung wie die Zuführung ist die Ableitung der Pufferlösung aus der Kammer. Die Ableitung der Kammer kann an eine Saugpumpe angeschlossen sein, die aktiv die Flüssigkeit aus der Kammer heraussaugt, ein Verfahren was vorzugsweise bei offenen Systemen angewendet wird. Dadurch werden extrem hohe Durchflußraten bis zu 500 ml/Stunde möglich.

Überraschenderweise wurde seitens der Erfinder festgestellt, daß die Empfindlichkeit des Verfahrens entscheidend dadurch gesteigert werden kann, wenn direkt vor der zu untersuchenden Lösung eine Volumeneinheit in der Größe von 10 bis 100% des Kammervolumens, bevorzugt 50-75% des Kammervolumens, eines mit der Untersuchungslösung nicht mischbaren Fluids, das aus einer mit der Untersuchungslösung nicht mischbaren Flüssigkeit oder einer Gasblase, die aus einem unedlen oder einem Edelgas bestehen kann oder beidem nacheinander besteht, in die Rheometerkammer eingebracht wird, um die Adsorptionsoberfläche auf der Quarzplatte zunächst von Fremdstoffen freizuspülen, das effektive Flüssigkeitsvolumen in der Kammer in kürzester Zeit auf 10 - 30% für eine äußerst schnelle Durchmischung innerhalb von 0.5-1 s zu reduzieren, hauptsächlich aber, um eine extrem dünne Flüssigkeitsschicht von 10-300 nm Dicke auf der Quarzglasoberfläche zu erzeugen.

Dabei ist besonders bevorzugt, daß das Einbringen des Fluids in die Probenkammer in Form einer Luftblase geschieht, die unmittelbar vor der Probenlösung in die Probenkammer eingebracht wird und die die in der Probenkammer vorhandene Pufferlösung zunächst nahezu vollständig verdrängt, so daß eine direkte Benetzung der Adsorptionsoberfläche auf der Quarzplatte mit der zu untersuchenden proteinhaltigen Probenlösung ermöglicht wird. Die Größe des Totvolumens bzw. der Luftblase beträgt dabei bis zu 1000 µl, bevorzugt bis zu 150 µl und besonders bevorzugt bis zu 75 µl. Die Luftblase wird dann durch die Absaugvorrichtung augenblicklich entfernt.

In einer anderen Anwendungsform können die Drehung des Rotors und der Flüssigkeitsstrom angehalten werden, vorzugsweise, wenn sich die Luftblase und somit die extrem dünne Flüssigkeitsschicht im Meßfeld der Quarzglasplatte befindet.

Die vorliegende Erfindung ist daher auch auf ein Verfahren zur Analyse einer Flüssigkeit gemäß dem Anspruch 20. Dabei kann der Flüssigkeitsstrom durch Zuführung von Volumeneinheiten aus einer mit der Flüssigkeit nicht mischbaren Flüssigkeit oder Luftblasen oder beidem in Volumenstromsegmente unterteilt werden, so daß eine wiederholte Erzeugung von extrem dünnen Flüssigkeitsschichten auf der Oberfläche bewerkstelligt wird. Das ist z.B. bei sehr langsamen Kinetiken in einem niedrigen Konzentrationsbereich notwendig. Dies wird im einfachsten Fall dadurch erreicht, daß der Flüssigkeitsstrom über ein Zweiwegeventil mit je einer Zuführung für den Flüssigkeitsstrom der Pufferlösung und das nicht mischbare Fluid und einer gemeinsamen Abführung in Richtung der Probenanalysenkammer geleitet wird, wobei während der Analyse des Flüssigkeitsstromes in der Probenanalysenkammer in Intervallen zwischen den beiden Zuführungspositionen am Zweiwegeventil intermittierend geschaltet wird. Hierzu wird dem Zweiwegeventil sowohl der Flüssigkeitsstrom als auch die nicht mischbare Flüssigkeit oder Luft mit Hilfe von Pumpen zugeführt.

Wenn in der zu untersuchenden Flüssigkeit biologisch aktive Moleküle wie z.B. Proteine enthalten sind, können die adsorbierten Proteine optisch mit Hilfe eines Fluoreszenzspektrophotometers mit einer Anregungswellenlänge von 290 nm und Emissionswellenlänge von 350 nm nachgewiesen werden. Dazu ist auf der Quarzplatte ein Prisma angebracht, das mit der Quarzplatte z.B. mittels eines Mediums des gleichen Brechungsindexes, z.B. Glyzerin, optisch gekoppelt ist. Dazu wird ein monochromatischer Lichtstrahl von einer Xenonlampe erzeugt, der über einen Anregungsmonochromator geleitet in einem nahezu rechten Winkel auf das Prisma auftrifft und die evaneszente Welle mit den an der Grenzfläche fest/flüssig adsorbierten Proteinen in Wechselwirkung tritt und das in diesen als Fluorophor dienende Tryptophan zur Emission von Fluoreszenzlicht anregt. Dieses Fluoreszenzlicht tritt in einer zur Drehachse des Rotors parallelen Richtung senkrecht zur Quarzplatte aus und wird über ein optisches System aus Spiegeln und Linsen in einen Emissionsmonochromator geleitet, der wiederum mit einem Photomultiplier zur Bestimmung der Lichtintensität verbunden ist.

Durch eine zweite bevorzugte Anwendungsart ist es möglich, daß bei Einsatz einer nicht-adsorbierenden Quarzplatte die evaneszente Welle die Grenzschicht fest/flüssig (Flüssigkeit/Quarzplatte) unverändert durchdringt und auf der anderen Seite des Flüssigkeitsfilmes in die Phasengrenzschicht Flüssigkeit/Gasblase eindringt, um die Fluoreszenz von in der Grenzschicht angereicherten oder an der Grenzfläche adsorbierten biologisch aktiven Molekülen zeitabhängig zu bestimmen, beispielsweise für die Erstellung von Flotations- oder Schaumtrennverfahren zur Fraktionierung biologischer Materialien.

In einer dritten bevorzugten Anwendungsart ist die vorliegende Erfindung darauf gerichtet, die Dicke des extrem dünnen Flüssigkeitsfilmes selbst mit Hilfe der evaneszenten Welle zu bestimmen. Hierzu wird die Durchflußzelle mit einer von zwei Luftblasen in einem Schlauch eingeschlossenen und dann austretenden hochfluoreszierenden Lösung, beispielsweise 4.5 mM Hydroxytryptophan, durchströmt. Passiert die Luftblase das Meßfeld und ist die Flüssigkeitsschichtdicke größer als die Eindringtiefe der evaneszenten Welle, dann wird keine Änderung des Fluoreszenzsignales meßbar sein. Ist die Dicke der ultradünnen Flüssigkeitsschicht dagegen kleiner als die Eindringtiefe der evaneszenten Welle, dann wird die evaneszente Welle den Flüssigkeitsfilm ganz durchdringen, d.h. an der Grenzfläche fest/flüssig eindringen und an der Grenzfläche flüssig/Luft wieder austrete, um in die nichtfluoreszierende Luft des Blaseninneren einzutreten, was zu einem sofortigen Absinken des Fluoreszenzsignales führt. Da die Eindringtiefe der evaneszenten Welle bekannt ist, läßt sich die Schichtdicke der Flüssigkeitsschicht bestimmen. Da ferner die Eindringtiefe der evaneszenten Welle von der Wellenlänge des Lichtes abhängt, lassen sich beliebige Eindringtiefen für beliebige Schichtdicken erzeugen. Schichtdickenbestimmungen dieser Art sind von großer Bedeutung für die Ermittlung von Massentransportkoeffizienten biologisch aktiver Moleküle in Grenzschichten für kinetische oder relaxationskinetische Messungen insbesondere auch für Biosensorsysteme. Desweiteren könnte mit einem solchen Verfahren der Schichtdickenbestimmung die Herstellung ultradünner Schichten in Materialbeschichtungsverfahren der chemischen Industrie überwacht werden.

Das Fluoreszenzsignal wird aufgezeichnet (in Meßsignalen pro Sekunde) CPS in bezug auf die Fluoreszenz der Pufferkontrolle. Selbstverständlich können die Zu- und Abführungen auch in der Außenwand der Rheometerkammer angeordnet sein, wobei allerdings die zuvor beschriebene Anordnung der Zu- und Ableitung in der Quarzplatte in einer Linie mit der Drehachse des Rotors, bzw. der Kegelspitze die vorteilhafteste Ausführungsform darstellt.

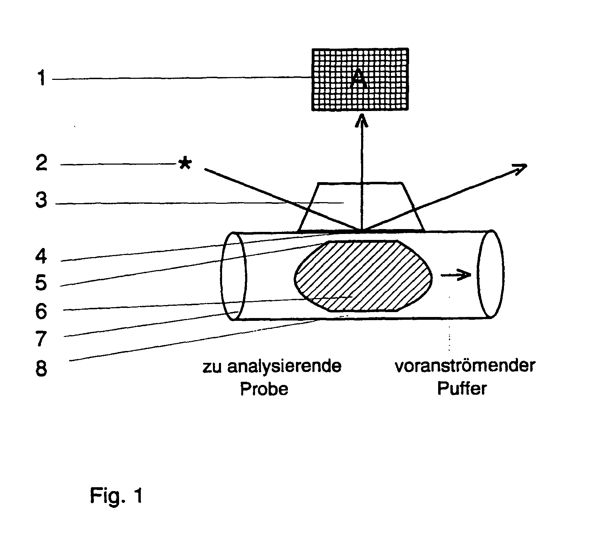

Figur 1 zeigt eine auf die wesentlichsten Elemente vereinfachte Form eines Durchfluß-Scheranalysators, bestehend zum einen aus der einer Durchflußküvette ähnlichen Probenkammer (7), die einen zur Flußrichtung kreisförmigen Querschnitt besitzt. Auf dem oberen Wandabschnitt befindet sich zum anderen die optische Einheit, bestehend aus Lichtquelle (2), optisch gekoppeltem Prisma (3), Fluoreszenzlichtanalysator (1), zur Leitung und Messung der von den Molekülen emittierten Lichtstrahlung angebracht. Links ist zuleitungsseitig eine definierte Volumeneinheit eines nicht mischbaren Fluids (6), vorzugsweise einer Luftblase, hinter dem voranströmenden Puffer und vor der zu analysierenden Probe zugespeist worden. Zwischen Fluid und Kammerwand wird auf Grund des Spaltdruckes ein extrem dünner (100-200 nm dicken) Flüssigkeitsfilm (8) erzeugt, der eine flüssig/fest (4) und eine flüssig/Fluid (5) Grenzschicht ausbildet. In einem solchen geschlossenen Durchfluß-Scheranalysatorsystem findet in der Regel ein Flüssigkeitsstrom in Richtung des Pfeiles statt, wobei je nach Bedarf ein Stromstillstand (stopped flow) oder eine Stromumkehr erfolgen kann. Gleichzeitig kann der hydrostatische Druck in der Kammer zur Veränderung des Spaltdruckes erhöht oder erniedrigt werden. Ferner kann beispielsweise durch eine Temperaturerhöhung der Partialdruck in der Luftblase zur Änderung des Spaltdruckes variiert werden. Die im Reflektionspunkt des Lichtstrahles (2) erzeugte evaneszente Welle durchdringt die ultradünne Flüssigkeitsschicht senkrecht zur Flußrichtung nach unten und erlaubt die Analyse von biologisch aktiven Molekülen je nach Randbedingungen in der flüssig/Fest (4) Grenzschicht, der flüssig/Fluid (5) Grenzschicht oder in der Bulkphase der ultradünnen Flüssigkeitsschicht (8) oder bei einem flüchtigen Molekül im Gasraum selbst.

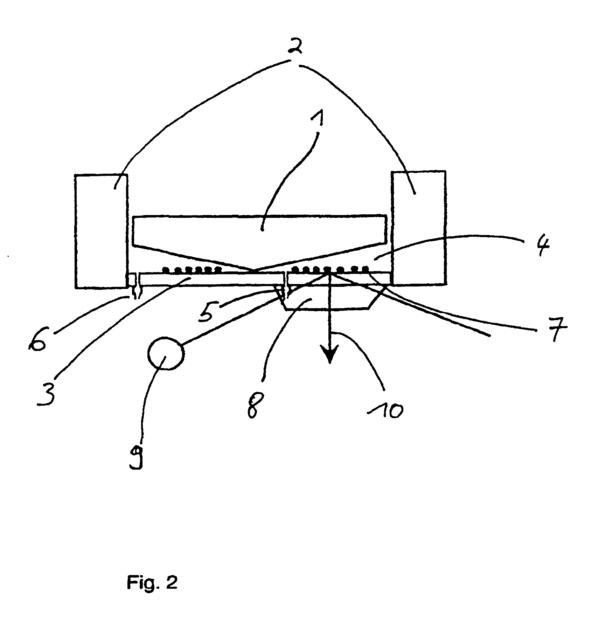

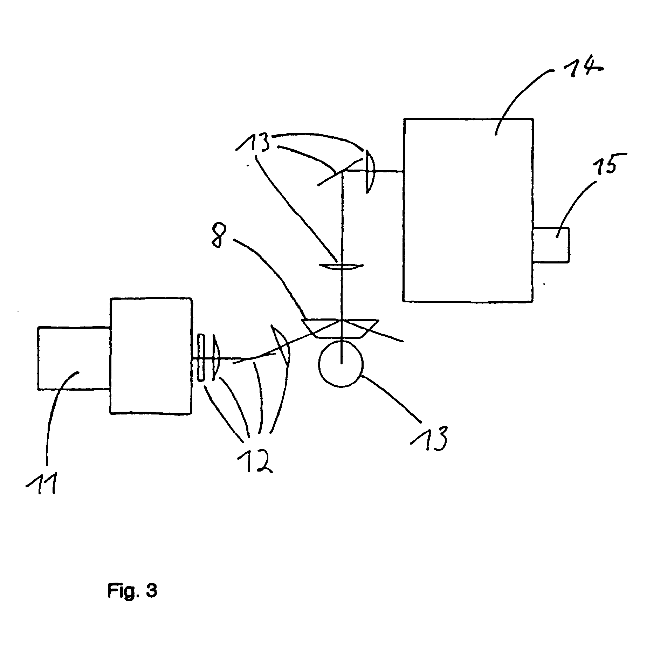

Im folgenden wird eine bevorzugte Ausführungsform des erfindungsgemäßen Rheometers unter Bezugnahme auf die beigefügten Figuren 2 und 3 beschrieben.

Dabei zeigt Figur 2 einen schematischen Längsquerschnitt durch einen erfindungsgemäßen Analysator mit Rheometereinheit in Höhe der Drehachse des Rotors; und Figur 3 den schematischen Aufbau der verwendeten optischen Einheit.

Wie in Figur 2 in einem Längsquerschnitt durch die erfindungsgemäße Rheometereinheit gezeigt, ist der drehbare Rotor (1) innerhalb der schematisch angedeuteten Rotorkammerwände (2) drehbar gelagert. Der Rotor berührt mit der Spitze die Quarzplatte (3), die zwischen den Rotorkammerseitenwänden (2) dicht abschließend gehalten wird. In die Probenkammer (4) mündet nahe der Kegelspitze, die die Quarzplatte (3) berührt, der Zufluß (5) und die über den Zufluß (5) zugeführte Flüssigkeit wird über den Abfluß (6) aus der Probenkammer wieder aktiv durch Absaugen entfernt. Bei Rotation des drehbar gelagerten Rotors durch Antrieb des in der Zeichnung nicht dargestellten Motors wirken auf den an der der Probenkammer zugewandten Seite der Quarzplatte haftenden Flüssigkeitsfilm, in dem die in der Figur 2 als schwarze Punkte dargestellten Proteine (7) enthalten sind, wobei bei steigender Drehzahl die Dicke der Flüssigkeitsschicht durch die Scherkräfte reduziert wird.

Möglichst in der Nähe der Zuleitung (5) der Pufferlösung, bzw. der in der Zuleitung der Pufferlösung angeordneten, in der Zeichnung nicht dargestellten Injektionsöffnung für die zu untersuchende Probenlösung ist optisch gekoppelt ein Prisma (8) auf der der Probenkammer abgewandten Seite der Quarzplatte (3) angebracht. Der aus der Lichterzeugungseinheit (9), die hier nur schematisch dargestellt ist, austretende Lichtstrahl wird über das Prisma auf die adsorbierten Proteine gelenkt und regt den in den Proteinen vorhandenen Tryptophanfluorophor zur Erzeugung eines Fluoreszenzlichtes (10) an, das senkrecht in Richtung des Prismas parallel zur Rotationsachse des Rotors (5) austritt und in Richtung des Emissionsmonochromators mit angeschlossener Auswertungseinheit, die in Fig. 2 nicht dargestellt sind, geleitet wird.

In Figur 3 ist der Lichtgang des erzeugten monochromatischen Lichts genauer dargestellt. Dabei wird das von der Xenonlampe (11) erzeugte Licht zunächst in monochromatisches Licht umgesetzt, über optische Elemente wie Schlitzraster, Linsen und Spiegel (12) auf das Prisma (8) geleitet und der von der Probe emittierte Fluoreszenzlichtstrahl (10) über Linsen und Spiegel (13) in den Emissionsmonochromator (14) geleitet, der mit einem Photomultiplier verbunden ist und dessen Signale in einer angeschlossenen Recheneinheit (15) ausgewertet werden.

Unter Verwendung des erfindungsgemäßen Rheometers, wie es in Figuren 2 und 3 dargestellt ist, wurden die adsorptionskinetischen Eigenschaften beispielhaft von Fibrinogen gemessen, und die erhaltenen Ergebnisse sind in den Figuren 4 und 5 bei einer konstanten Temperatur von 23 °C dargestellt.

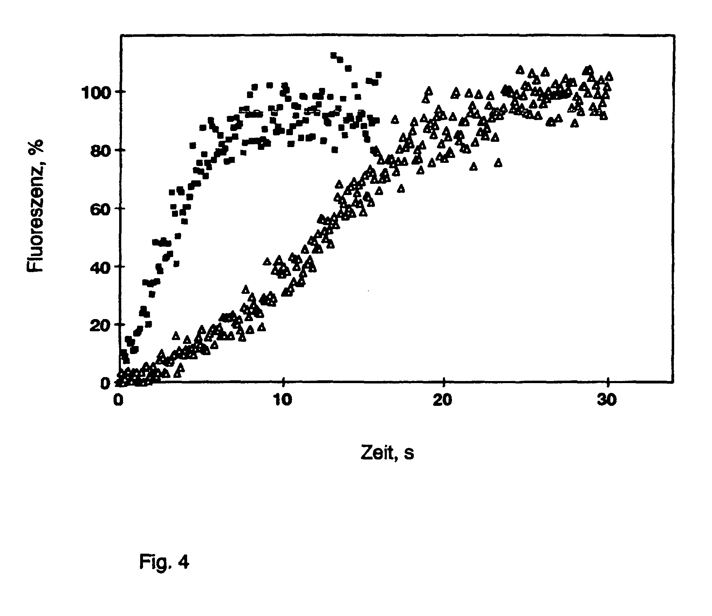

Dabei zeigt Figur 4 den Vergleich der Adsorptionsgeschwindigkeiten von Fibrinogen auf Quarzglas, wobei vor der zu untersuchenden Lösung eine Luftblase von 75 µl (geschlossene Quadrate) injiziert wurde, bzw. -keine Luftblase (offene Dreiecke) in eine Kammer von 120 µl injiziert wurde. Die Proteinkonzentration betrug dabei 100 µg/ml, die Durchflußrate 150 ml/Std. und die Scherrate des Rheometers 7200 s$^{-1}$. Wie dem Diagramm 1 zu entnehmen ist, nimmt durch die Vorinjektion einer Luftblase die Halbwertszeit der Adsorption von 12.7 Sekunden (ohne Luftblase) auf 2.6 Sekunden (mit Luftblase) ab. Ferner verschwindet die Sigmoidität der Kurve zugunsten einer Exponentialfunktion. Die unkorrigierten 100% Werte betrugen 2300 cps ohne und 2000 cps mit Luftblase.

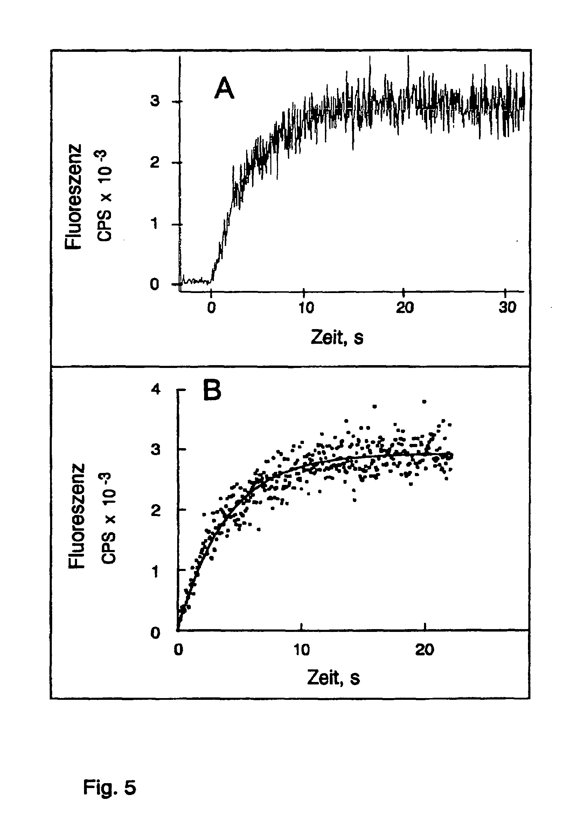

Figur 5 zeigt die exponentielle Adsorptionskinetik von Fibrinogen auf Quarzglas, die mit der Methode der TIRF-Rheometrie unter Vorinjektion einer Luftblase gemessen wurde. Bei dieser Messung betrug die im Durchfluß konstant gehaltene Proteinkonzentration 188 μg/ml, die Durchflußrate 150 ml/Std. und die Scherrate des Rheometers 720 s$^{-1}$. In der oberen Abbildung A ist die original Online-Aufzeichnung der Kinetik dargestellt. Die nicht-lineare Anpassung der experimentellen 443 Punkte an eine Exponentialfunktion

$$[(F = F_{max} (1 - e^{-k_{obs} t}),$$

wobei F die Fluoreszenz in cps, $F_{max}$ die maximale Fluoreszenz in cps, $k_{obs}$ die observierte Geschwindigkeitskonstante als Anstieg der Exponentialfunktion und t die Zeit darstellen.] ergab die Werte $k_{obs}$ = 0.261 + 0.006 s$^{-1}$, P-Wert der Residuals = 0.138 und r$^2$ = 0.90. Werden die bei verschiedenen Fibrinogenkonzentrationen ($C_0$) gemessenen $k_{obs}$-Werte als Funktion der Konzentration $C_0$ nach der Gleichung $k_{obs}$ = k+$_1$ $C_0$ + k-$_1$ aufgetragen, so ergibt sich eine Gerade, bei der sich aus dem Schnittpunkt mit der Ordinate die Desorptionsgeschwindigkeitskonstante (k-$_1$ = 0.082 s$^{-1}$) und aus dem Anstieg der Geraden die Adsorptionsgeschwindigkeitskonstante (k+$_1$ = 3.5 x 10$^5$ M$^{-1}$s$^{-1}$) gleichzeitig bestimmen lassen. Unabhängige Bestimmungen der Desorptionsgeschwindigkeiten des Fibrinogens mit Hilfe der Luftblasentechnik erlaubten die Ermittlung zusätzlicher Geschwindigkeitskonstanten der Desorption (k-$_2$ = 2 x 10$^{-4}$ s$^{-1}$, k-$_3$ = 5.8 x 10$^{-6}$ s$^{-1}$), die sich auf Reaktionskinetiken zwischen den adsorbierten Molekülen auf der Oberfläche, Konformationsänderungen ($k_s$ ~ 0.1 s$^{-1}$) oder aber auf Reaktionen mit Liganden des adsorbierten Proteins zurückführen ließen. Im einfachsten Fall stellt die Bindung eines zweiten im Puffer gelösten Fibrinogenmoleküls an ein auf der Oberfläche adsorbiertes erstes Fibrinogenmolekül einen solchen Liganden dar, wobei bekanntermaßen eine Proteindoppel- oder -mehrfachschicht auf der Oberfläche entsteht. Doch können auch Ionen, organische Moleküle oder auch Kofaktoren solche Liganden darstellen und zu veränderten Geschwindigkeitskonstanten führen.

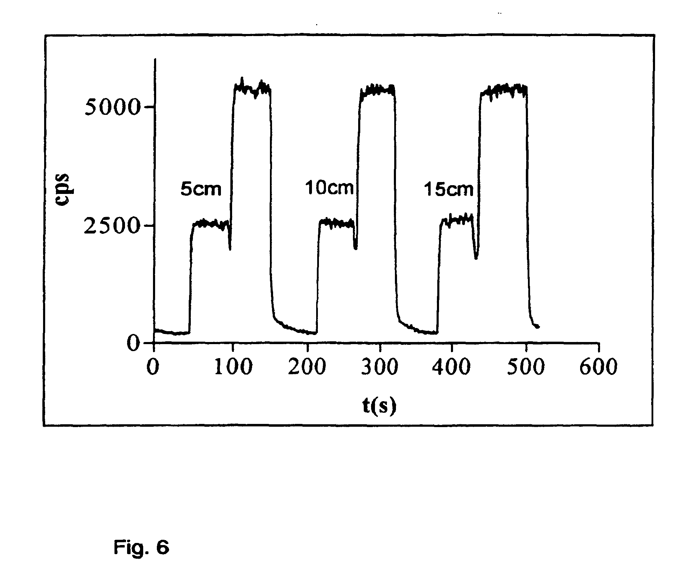

Figur 6 demonstriert in der Ausführungsform des erfindungsgemäßen Rheometers die Messung des Eindringens der evaneszenten Lichtwelle in und durch die ultradünne Flüssigkeitsschicht hindurch in den Gasraum der Luftblase bei einer konstanten Temperatur von 23 °C. Ein Hydroxytryptophanstandard der Konzentration 0.22 mM (erster Anstieg von ca. 200 cps auf 2500 cps) wird durch eine Luftblase von einer zweiten folgenden Konzentration von 0.68 mM (zweiter Anstieg auf 5200 cps) getrennt durch die Meßkammer geleitet und dann durch Wasser ausgewaschen (Abfall von 5200 cps auf 200 cps). Das Eindringen der evaneszenten Welle in den Luftraum der Blase wird durch einen steilen Abfall der Fluoreszenz ("Nase") von der Ebene um 2500 cps direkt vor dem Anstieg auf 5200 cps sichtbar. Bei einer Durchflußrate von 145 ml/h durch die Rheometerkammer (Kammervolumen: 120 μl) und einer Luftblasengröße von 5, 10, 15 cm in einem Silikonschlauch (Durchmesser 1.3 mm) zugeführt, entspricht dies einem ungefähren Luftvolumen von 75 μl, 150 μl und 225 μl. Die Fläche der "Nase" nimmt mit der Größe der Luftblase zu, was der längeren Verweildauer der evaneszenten Welle in der Blase entspricht. Da die evaneszente Welle unter den verwendeten experimentelle Bedingungen eine Eindringtiefe von ~250-300 nm besaß, muß der durchdrungene Flüssigkeitsfilm eine Schichtdicke, die kleiner als 300 nm ist, besitzen.

## Patentansprüche

1. Durchfluß-Scheranalysator zur Messung der Adsorptions-Desorptions- und Reaktionskinetik von Molekülen mit signalgebenden Eigenschaften an Oberflächen, umfassend:

   a) einen Probenkammerblock

      i. mit einer darin befindlichen Probenkammer zur Aufnahme von Analysen-, bzw. Pufferlösung, die zumindest eine Probenkammerwand aus einem strahlungsdurchlässigen Material aufweist;
      ii. mit einer Zuleitung für die Pufferlösung in die Probenkammer und einer Ableitung für die Pufferlösung aus der Probenkammer; und
      iii. mit einer verschließbaren Injektionsöffnung zum Einbringen einer Probenlösung auf der Zuleitungsseite der Probenkammer;

   b) Mittel zur Erzeugung von extrem dünnen Flüssigkeitsschichten in der, in der Probenkammer befindlichen Pufferlösung, so dass die Geschwindigkeit der Adsorption der signalgebenden Moleküle an der Meßoberfläche nicht durch den Massentransport der Moleküle zu dieser Grenzschicht zwischen Lösung und Oberfläche beeinflusst wird;
   c) eine Analysatoreinheit für die Leitung und Auswertung der von den signalgebenden Molekülen emittierten Signale, oder der durch die adsorbierten Moleküle bedingten Beeinflussung der physikalischen und optischen Parameter der Meßoberfläche unter Änderung der von der Oberfläche selbst ausgehenden messbaren Oberflächensignale oder -strahlung, bestehend aus, falls erforderlich, einer Strahlungsquelle, mindestens einem Strahlungsleiter und einem Strahlungsanalysator;

d) eine Pumpe zur Zuführung der Pufferlösung über die Zuleitung in die Probenkammer; und gegebenenfalls

e) eine Pumpe zur Abführung der Pufferlösung aus der Probenkammer über die Ableitung umfasst,

wobei die Mittel zur Erzeugung von extrem dünnen Flüssigkeitsschichten in Form einer zuleitungsseitig angeordneten Vorrichtung ausgebildet sind, die den Volumenstrom der Pufferlösung in der Zuleitung durch Einbringen von mindestens einer Volumeneinheit aus einem mit der Pufferlösung nicht mischbaren Fluid, gewünschtenfalls unter Beaufschlagung mit Druck, in Volumenstromsegmente unterteilt.

2. Analysator nach Anspruch 1, **dadurch gekennzeichnet, dass** die Pufferlösung aus einer hydrophilen (polaren) oder hydrophoben (apolaren) Flüssigkeit besteht.

3. Analysator nach Anspruch 1-2, **dadurch gekennzeichnet, dass** das mit der jeweiligen Pufferlösung nicht mischbare Fluid aus Gas oder einer mit der Pufferflüssigkeit nicht mischbaren Flüssigkeit besteht.

4. Analysator nach einem der Ansprüche 1 bis 3, **dadurch gekennzeichnet, dass** die Pufferlösung aus einem Puffer besteht und das nicht mischbare Fluid aus Luft.

5. Analysator nach einem der Ansprüche 1 bis 4, **dadurch gekennzeichnet, dass** die Probenkammer zur Aufnahme von Analysen- bzw. Pufferlösung in Form einer strahlungsdurchlässigen Durchflußküvette mit einem senkrecht zur Flußrichtung rechtekkigen oder kreisförmigen Querschnitt ausgestattet ist.

6. Analysator nach Anspruch 5, **dadurch gekennzeichnet, dass** die Probenkammerwand aus einem strahlungsdurchlässigen Material aus einem Quarzglas, vorzugsweise in Form einer Quarzplatte, besteht.

7. Analysator nach einem der Ansprüche 1 bis 4, wobei weitere Mittel zur Erzeugung der extrem dünnen Flüssigkeitsschichten **dadurch** ausgebildet sind, dass die Probenkammer in Form einer zylindrischen Rheometerkammer zur Aufnahme von Analysen- bzw. Pufferlösung ausgebildet ist,

i. deren eines Ende von einer lichtdurchlässigen Quarzplatte dicht verschlossen ist,

ii. in der ein zylinderförmiger Rotor aus einem lichtdurchlässigen Material drehbar gelagert ist, dessen Außendurchmesser dem Innendurchmesser der Rheometerkammer angepasst ist, wobei der zylindrische Rotor an der, der Quarzplatte zugewandten Seite kegelförmig ausgebildet ist und die Quarzplatte mit der in der Drehachse des Rotors liegenden Kegelspitze berührt; und

iii. die eine Zuleitung und eine Ableitung für die Pufferlösung in die aus Rheometerkammerinnenwänden, Rotorkegel und lichtdurchlässiger Quarzplatte gebildeter Probenkammer, aufweist; und

iv. ein Motor zum Antrieb des Rotors vorgesehen ist.

8. Analysator nach Anspruch 7, **dadurch gekennzeichnet, dass** die Zuleitung und die Ableitung der Probenlösung im wesentlichen diametral zur Rotordrehachse angeordnet sind.

9. Analysator nach Anspruch 7 oder 8, **dadurch gekennzeichnet, dass** die Zuleitung und die Ableitung in der lichtdurchlässigen Quarzplatte angeordnet sind.

10. Analysator nach Anspruch 9, **dadurch gekennzeichnet, dass** die Zuleitung nahe der Drehachse des Rotors und die Ableitung am Außenrand der Probenkammer in einer Linie mit der Drehachse des Rotors auf der lichtdurchlässigen Quarzplatte angeordnet sind.

11. Analysator nach einem der Ansprüche 7-10, **dadurch gekennzeichnet, dass** der Winkel zwischen Rotorachse und Tangentiale an der Kegelmantelfläche 85°-89.9° beträgt.

12. Analysator nach einem der vorhergehenden Ansprüche, **dadurch gekennzeichnet, dass** die verschließbare Injektionsöffnung zum Einbringen einer Probenlösung in die Probenkammer in der Zuleitung angeordnet ist.

13. Analysator nach einem der vorhergehenden Ansprüche , **dadurch gekennzeichnet, dass** die Analysatoreinheit c) aus einer optischen Einheit aus einer Lichtquelle, die einen monochromatischen Lichtstrahl liefert, einem Strahlungsleiter, vorzugsweise einem optischen Prisma, und einem Strahlungsanalysator, vorzugsweise einem Emissionsmonochromator mit angeschlossener Auswertungseinheit besteht, wobei der Strahlungsleiter und die Lichtquelle derart zueinander angeordnet sind, dass der aus der Lichtquelle austretende Lichtstrahl über den auf der strahlungsdurchlässigen Probenkammerwand optisch gekoppelt angeordneten Strahlungsleiter in einem Winkel, der größer als der kritische Winkel für das dichtere Medium ist, auf die Grenzschicht zwischen Probenkammerwand und Lösung auftrifft, und das gebildete Fluoreszenzlicht, das an der Grenzschicht zwischen Probenkammerwand und Probenflüssigkeit in der Probenkammer erzeugt wird und im wesentlichen lotrecht zur Oberfläche der Probenkammerwand austritt, über ein optisches System in den Strahlungsanalysator geleitet wird.

14. Analysator nach Anspruch 13, **dadurch gekennzeichnet, dass** der Strahlungsleiter ein Prisma oder eine Glasleiterfaser ist.

15. Analysator nach Anspruch 13 oder 14, **dadurch gekennzeichnet, dass** der Strahlungsanalysator ein Emissionsmonochromator ist.

16. Analysator nach einem der vorhergehenden Ansprüche, **dadurch gekennzeichnet, dass** die signalgebenden Moleküle biologisch aktive Moleküle sind.

17. Analysator nach einem der vorhergehenden Ansprüche, **dadurch gekennzeichnet, dass** die signalgebenden biologisch aktiven Moleküle strahlungsfähige Proteine sind, die mit Liganden reagieren können.

18. Analysator nach einem der vorhergehenden Ansprüche, **dadurch gekennzeichnet, dass** die dem Probenkammerinneren zugewandte Seite der Probenkammerwand aus einem strahlungsdurchlässigen Material mit einer die Ankopplung oder Bindung der strahlungsfähigen Moleküle erleichternden Beschichtung versehen ist, die spezifizierend wirken kann.

19. Verfahren zur Bestimmung der Dicke einer ultradünnen Flüssigkeitsschicht, **dadurch gekennzeichnet, dass** man durch die Zuführung eines nicht mischbaren Fluids in den Flüssigkeitsstrom eines stark fluoreszierenden, nicht an der Grenzfläche fest/flüssig adsorbierenden Fluorophors eine ultradünne Flüssigkeitsschicht auf der Meßoberfläche erzeugt und diese mit einer evaneszenten Lichtwelle größerer Durchdringungstiefe soweit durchstrahlt, dass es zu einem Messsignal, beispielsweise einer messbaren Reduktion des Fluoreszenzsignales, durch den Eintritt der evaneszenten Welle in das Innere des nicht fluoreszierenden Fluids kommt.

20. Verfahren zur Analyse einer Flüssigkeit auf einen in einer ultradünnen Flüssigkeitsschicht der Flüssigkeit vorhandenen Inhaltsstoff in einer Probenanalysekammer, **dadurch gekennzeichnet, dass** man den durch die Probenanalysekammer zu leitenden Flüssigkeitsstrom in der Zuführung vor Eintritt in die Probenanalysekammer durch ein mit der Flüssigkeit nicht mischbares Fluid in Volumenstromsegmente unterteilt, anschließend die segmentierten Volumenstromsegmente in die Probenanalysekammer leitet und dann die Volumenstromsegmente in der Analysenkammer auf den an der Grenzschicht der ultradünnen Flüssigkeitsschicht zwischen der Festphase/Flüssigkeit oder zwischen Fluid/Flüssigkeit angereicherten Inhaltsstoff untersucht.

21. Verfahren nach einem der Ansprüche 19 bis 20, **dadurch gekennzeichnet, dass** das mit der Flüssigkeit des Flüssigkeitsstromes nicht mischbare Fluid aus Gas oder einer nicht mischbaren Flüssigkeit besteht.

22. Verfahren nach einem der Ansprüche 19-21, **dadurch gekennzeichnet, dass** man den Flüssigkeitsstrom über ein Zweiwegeventil mit je einer Zuführung für den Flüssigkeitsstrom und das mit der Pufferlösung nicht mischbare Fluid und einer gemeinsamen Abführung in Richtung der Probenanalysenkammer leitet, wobei während der Analyse des Flüssigkeitsstromes in der Probenanalysenkammer in Intervallen zwischen den beiden Zuführungspositionen am Zweiwegeventil intermittierend geschaltet wird.

23. Verfahren nach einem der Ansprüche 19-22, **dadurch gekennzeichnet, dass** der scherkraftbewirkende Flüssigkeitsstrom, der die mit Hilfe des Fluids erzeugte ultradünne Flüssigkeitsschicht auf der Oberfläche in Richtung der Strömung bewegt, für die Messung des in der Flüssigkeit vorhandenen Inhaltsstoffs oder für die Bestimmung der Schichtdicke der Flüssigkeitsschicht angehalten wird.

24. Verfahren nach einem der Ansprüche 19-23, **dadurch gekennzeichnet, dass** der Flüssigkeitsstrom für die Messung des in der Flüssigkeit vorhandenen Inhaltsstoffs oder der Schichtdicke in seiner Richtung umgekehrt wird.

25. Verfahren nach einem der Ansprüche 19-24, **dadurch gekennzeichnet, dass** die Temperatur für die Messung des in der Flüssigkeit vorhandenen Inhaltsstoffes sprunghaft verändert wird.

26. Verfahren zur Bestimmung der Adsorptions-, Desorptions- oder Reaktionsgeschwindigkeitskonstanten von signalgebenden Molekülen an Oberflächen unter Verwendung des Analysators nach einem der Ansprüche 1 bis 18, das die folgenden Schritte umfasst:

a) Durchleiten einer Pufferlösung durch die Probenkammer im Analysator;
b) Einbringen der zu untersuchenden Probenlösung über die Injektionsöffnung in die Probenkammer;
c) Beaufschlagen des optischen Prismas mit monochromatischem Licht in einem kritischen Winkel von etwa 70';
d) Messen der Lichtintensität des an der Grenzschicht zwischen Quarzplatte und Probenkammer erzeugten und im wesentlichen lotrecht zur Quarzplatte aus- und in den Emissionsmonochromator eintretenden Fluoreszenzlichtes,

wobei vor Einbringen der Probenlösung in die Probenkammer ein nicht mit der Probenlösung mischbares Fluid von maximal 1000 µl in die Zuleitung eingebracht wird.

27. Verfahren nach Anspruch 26, **dadurch gekennzeichnet, dass** das Fluid in Form einer Luftblase in die Probenkammer eingebracht wird.


## Claims

1. Flow-through shear analyser for measuring the adsorption-desorption and reaction kinetics of molecules with signal-generating properties on surfaces, comprising:

a) a sample chamber block

i. with a sample chamber located therein for receiving analysis or buffer solution, which sample chamber comprises at least one sample chamber wall made of a radiation-permeable material;
ii. with a supply line for the buffer solution into the sample chamber and a removal line for the buffer solution out of the sample chamber; and
iii. with a closable injection opening on the supply line-side of the sample chamber for introducing a sample solution;

b) a means for generating extremely thin liquid layers in the buffer solution located in the sample chamber, so that the adsorption rate of the signal-generating molecules on the measurement surface is not influenced by the mass transport of the molecules to this interface layer between solution and surface;
c) an analyser unit for direction and evaluation of the signals emitted by the signal-generating molecules, or of the influence of the physical and optical parameters of the measurement surface as determined by the molecules by changing the measurable surface signals or surface radiation emerging from the surface; composed of, if required, a radiation source, at least one radiation conduit and a radiation analyser;
d) a pump for supplying of the buffer solution via the supply line in the sample chamber; and, as the case may be,
e) a pump for removal of the buffer solution from the sample chamber via the removal line,

wherein the means for generating extremely thin liquid layers are formed as an apparatus arranged at the supply line-side, which apparatus subdivides the volume flow of the chamber solution in the supply line by introduction of at least one volume unit of the fluid which is immiscible in the buffer solution, if desired by subjecting to pressure.

2. The analyser according to claim 1, **characterized in that** the buffer solution is composed of a hydrophilic (polar) or hydrophobic (non-polar) liquid.

3. The analyser according to claim 1-2, **characterized in that** the fluid, which is immiscible with the respective buffer solution is composed of gas or of a liquid which is immiscible with the buffer liquid.

4. The analyser according to claim 1-3, **characterized in that** the buffer solution is composed of a buffer and the immiscible fluid is composed of air.

5. The analyser according to claim 1-4, **characterized in that** the sample chamber for receiving analysis or buffer solution is outfitted as a radiation-permeable flow-through cuvette with a rectangular or circular cross section perpendicular to the direction of flow.

6. The analyser according to claim 5, **characterized in that** the sample chamber wall is composed of a radiation permeable material made of quartz glass, preferably in the form of a quartz glass plate.

7. The analyser according to one of the claims 1-4, **characterized in that** further means for generating extremely thin liquid layers are provided in the form that the sample chamber is formed as a cylindrical rheometer chamber for receiving analysis or buffer solution,

i. its one end is tightly closed by a light-permeable quartz plate,
ii. in which a cylindrical rotor made of a light-permeable material is rotatably mounted, the outer diameter of which is adapted to the inner diameter of the rheometer chamber, wherein the cylindrical rotor is formed to be conical on the side facing the quartz plate and touches the quartz plate with the cone point laying in the rotational axis of the rotor; and

iii. which comprises a supply line and a removal line for the buffer solution into the sample chamber, formed by rheometer chamber inner walls, rotor cone and light-permeable quartz plate; and

iv. a motor for driving the rotor is provided.

8. The analyser according to claim 7, **characterized in that** the supply line and the removal line of the sample solution are arranged essentially diametrical to the rotational axis of the rotor.

9. The analyser according to claims 7 or 8, **characterized in that** the supply line and the removal line are arranged in the light-permeable quartz plate.

10. The analyser according to claim 9, **characterized in that** the supply line is arranged close to the rotational axis of the rotor and the removal line is arranged at the outer border of the sample chamber in line with the rotational axis of the rotor on the light-permeable quartz plate.

11. The analyser according to one of the claims 7-10, **characterized in that** the angle between the rotor axis and the tangential on the cone surface is 85°-89.9°.

12. The analyser according to any one of the preceding claims, **characterized in that** the closable injection opening for introducing a sample solution into the sample chamber is arranged in the supply line.

13. The analyser according to any one of the preceding claims, **characterized in that** the radiation analysis unit c) is composed of an optical unit consisting of a light source, which delivers a monochromatic light beam, a radiation conduit, preferably an optical prism and a radiation analyser, preferably an emission monochrometer with an evaluation unit connected thereto, wherein the radiation conduit and the light source are arranged with respect to one another such that the light beam emerging from the light source impinges upon the interface layer between the sample chamber wall and the solution via the radiation conduit arranged in an optically coupled fashion on the radiation permeable sample chamber wall at an angle, which is larger than the critical angle for the more dense medium, and the formed fluorescence light, which is generated at the interface layer between the sample chamber wall and the sample liquid in the sample chamber, and which emerges essentially perpendicular to the surface of the sample chamber wall, is directed via an optical system into the radiation analyser.

14. The analyser according to claim 13, **characterized in that** the radiation conduit is a prism or a glass fiber lead.

15. The analyser according to claims 13 or 14, **characterized in that** the radiation analyser is an emission monochrometer.

16. The analyser according to any one of the preceding claims, **characterized in that** the signal generating molecules are biologically active molecules.

17. The analyser according to any one of the preceding claims, **characterized in that** the signal generating biologically active molecules are proteins, which are capable of radiation, and which can react with ligands.

18. The arialyser according to any one of the preceding claims, **characterized in that** the side of the sample chamber wall made of a radiation-permeable material directed towards the inside of the sample chamber, is provided with a coating which promotes the coupling or the binding of the radiation-capable molecules, which can act in a specifying manner.

19. A method for determining the thickness of an ultrathin liquid layer, **characterized in that** by feeding an immiscible fluid into the liquid flow of a strongly fluorescing fluorophore, which does not adsorb at the solid/liquid interface an ultra-thin liquid layer is generated on the measurement surface, and this is radiated through with an evanescent light wave of high penetration depth to such an extent that a measurement signal, for example a measurable reduction of the fluorescence signal, is evolved by the entry of the evanescent wave into the inside of the non-fluorescing fluid.

20. A method for the analysis of a liquid for a component present in a ultra-thin liquid layer of the liquid in a sample analysis chamber, **characterized in that** the liquid flow to be fed through the sample analysis chamber is subdivided into volume flow segments prior to entry into the sample analysis chamber by a fluid, which is not miscible with the liquid, the segmented volume flow segments are subsequently directed into the sample analysis chamber, and then the volume flow segments in the analysis chamber are investigated for the component enriched at the interface layer of the ultra-thin liquid layer between the solid phase/liquid or between the fluid/liquid.

21. The method according to any one of claims 19 to 20, **characterized in that** the fluid, which is immiscible in the liquid of the liquid flow, is composed of gas or an immiscible liquid.

22. The method according to one of claims 19-21, **characterized in that** the liquid flow is directed in the direction of the sample analysis chamber via a two-way valve with one supply line each for the liquid flow and the fluid, which is immiscible with the buffer solution, and a common removal line, wherein during analysis of the liquid flow in the sample analysis chamber intermittent switching between the two supply line positions in the two-way valve takes place.

23. The method according to one of claims 19-22, **characterized in that** the shearing force-engendering liquid flow, which moves the ultra-thin liquid layer generated with the help of the fluid on the surface in the flow direction, is stopped for the measurement of the component present in the liquid or for the determination of the layer thickness of the liquid layer.

24. The method according to one of claims 19-23, **characterized in that** the liquid flow is reversed in its direction for the measurement of the component present in the liquid or of the layer thickness.

25. The method according to one of claims 19-24, **characterized in that** the temperature for the measurement of the component present in the liquid is changed in a jumpwise fashion.

26. A method for the determination of adsorption-, desorption-or reaction rate constants of signal-generating molecules on surfaces using the analyser according to one of the claims 1 to 18, which comprises the following steps:

    a) directing a buffer solution through the sample chamber in the analyser;
    b) introducing the sample solution to be studied via the injection opening into the sample chamber;
    c) irradiating the optical prism with monochromatic light at a critical angle of about 70';
    d) measuring the light intensity of the fluorescent light, which is generated at the interface layer between the quartz plate and the sample chamber, and which exits essentially perpendicular to the quartz plate and enters eseentially perpendicular into the emission monochrometer.

27. The method according to claim 26, **characterized in that** the fluid is introduced into the sample chamber in the form of an air bubble.

**Revendications**

1. Analyseur à cisaillement d'écoulement destiné à mesurer la cinétique d'adsorption, de désorption et de réaction de molécules présentant des propriétés d'émission de signaux sur des surfaces, lequel analyseur comporte :

    a) un bloc à chambre d'échantillons

        i. à l'intérieur duquel se trouve une chambre d'échantillons destinée à recevoir une solution d'analyse ou tampon qui comporte au moins une paroi de chambre d'échantillons réalisée dans un matériau transparent aux rayonnements ;
        ii. qui comporte une conduite d'amenée de la solution tampon dans la chambre d'échantillons et une conduite d'évacuation de la solution d'échantillons de la chambre d'échantillons ; et
        iii. qui comporte une ouverture d'injection pouvant être fermée, et destinée à introduire une solution d'échantillon du côté de la conduite d'amenée de la chambre d'échantillons ;

    b) des moyens de génération de couches de liquide extrêmement minces dans la solution tampon se trouvant dans la chambre d'échantillons, de sorte que la vitesse de l'adsorption de molécules émettrices de signaux à la surface de mesure n'est pas influencée par le transport de masse des molécules vers cette couche limite entre la solution et la surface ;
    c) une unité d'analyseur pour l'acheminement et l'exploitation des signaux émis par les molécules émettrices de signaux ou de l'influence des paramètres physiques et optiques de la surface de mesure par les molécules adsorbées en faisant varier les signaux ou le rayonnement de surface mesurables provenant de la surface elle-même, laquelle unité d'analyseur est constituée si nécessaire d'une source de rayonnement, d'au moins un guide de rayonnement et d'un analyseur de rayonnement ;
    d) une pompe d'amenée de la solution tampon dans la chambre d'échantillons par l'intermédiaire de la conduite d'amenée, et éventuellement
    e) une pompe d'évacuation de la solution tampon de la chambre d'échantillons par l'intermédiaire de la conduite d'évacuation,

    les moyens de génération de couches de liquide extrêmement minces étant configurés sous la forme d'un dispositif qui est disposé du côté de la conduite d'amenée et qui divise le flux volumique de la solution tampon dans la conduite d'amenée en des segments de flux volumique en introduisant au moins une unité volumique de fluide non miscible avec la solution tampon, si on le souhaite en appliquant une pression.

2. Analyseur selon la revendication 1, **caractérisé en ce que** la solution tampon est constituée d'un liquide hydrophile (polaire) ou hydrophobe (apolaire).

3. Analyseur selon la revendication 1-2, **caractérisé en ce que** le fluide non miscible avec la solution tampon respective est constitué d'un gaz ou d'un liquide non miscible avec le liquide tampon.

4. Analyseur selon l'une des revendications 1 à 3, **caractérisé en ce que** la solution tampon est un tampon et le fluide non miscible est de l'air.

5. Analyseur selon l'une des revendications 1 à 4, **caractérisé en ce que** la chambre d'échantillons destinée à recevoir la solution d'analyse ou tampon est configurée sous la forme d'une cuvette d'écoulement transparente au rayonnement de section rectangulaire ou circulaire perpendiculairement à la direction d'écoulement.

6. Analyseur selon la revendication 5, **caractérisé en ce que** la paroi de chambre d'échantillons réalisée dans un matériau transparent au rayonnement est en verre quartzeux, se présentant avantageusement sous la forme d'une plaque de quartz.

7. Analyseur selon l'une des revendications 1 à 4, dans lequel d'autres moyens de génération de couches de liquide extrêmement minces sont agencés en ce que la chambre d'échantillons est configurée sous la forme d'une chambre à rhéomètre cylindrique destinée à recevoir une solution d'analyse ou tampon,

   i. dont une extrémité est fermée de façon étanche par une plaque de quartz transparente à la lumière,

   ii. dans laquelle un rotor cylindrique en matériau transparent à la lumière est monté à rotation, dont le diamètre extérieur est adapté au diamètre intérieur de la chambre à rhéomètre, le rotor cylindrique étant configurée sous la forme de cône du côté dirigé vers la plaque de quartz et la plaque de quartz étant en contact avec la pointe du cône se trouvant dans l'axe de rotation du rotor ; et

   iii. qui comporte une conduite d'amenée et une conduite d'évacuation de la solution tampon dans la chambre d'échantillons formée par les parois intérieures de chambre à rhéomètre, le cône de rotor et la plaque de quartz transparente à la lumière ; et

   iv. dans lequel il est prévu un moteur d'entraînement du rotor.

8. Analyseur selon la revendication 7, **caractérisé en ce que** la conduite d'amenée et la conduite d'évacuation de la solution d'échantillons sont disposées en étant sensiblement diamétralement opposées à l'axe de rotation du rotor.

9. Analyseur selon la revendication 7 ou 8, **caractérisé en ce que** la conduite d'amenée et la conduite d'évacuation sont disposées dans la plaque de quartz transparente à la lumière.

10. Analyseur selon la revendication 9, **caractérisé en ce que** la conduite d'amenée est disposée près de l'axe de rotation du rotor et la conduite d'évacuation est disposée au niveau du bord extérieur de la chambre d'échantillons en étant alignée avec l'axe de rotation du rotor sur la plaque de quartz transparente à la lumière.

11. Analyseur selon l'une des revendications 7 à 10, **caractérisé en ce que** l'angle compris entre l'axe du rotor et la tangente à la surface d'enveloppe du cône est compris entre 85° et 89,9°.

12. Analyseur selon l'une des revendications précédentes, **caractérisé en ce que** l'ouverture d'injection pouvant être fermée et destinée à introduire une solution d'échantillons dans la chambre d'échantillons est ménagée dans la conduite d'amenée.

13. Analyseur selon l'une des revendications précédentes, **caractérisé en ce que** l'unité d'analyseur c) est une unité optique comportant une source lumineuse qui émet un faisceau lumineux monochromatique, un guide de rayonnement, avantageusement un prisme optique, et un analyseur de rayonnement, avantageusement un monochromateur d'émission raccordé à une unité d'exploitation, le guide de rayonnement et la source lumineuse étant disposés l'un par rapport à l'autre de telle sorte que le faisceau lumineux émis par la source lumineuse est transmis par le guide de rayonnement disposé de façon couplée optiquement sur la paroi de chambre d'échantillons transparente au rayonnement et est incident selon un angle qui est supérieur à l'angle critique pour le milieu plus dense, à la couche limite entre la paroi de chambre d'échantillons et la solution, et la lumière fluorescente formée, qui est générée au niveau de la couche limite entre la paroi de chambre d'échantillon et le liquide d'échantillon dans la chambre d'échantillon et qui sort sensiblement perpendiculairement à la surface de la paroi de chambre d'échantillons, étant guidée par un système optique et introduite dans l'analyseur de rayonnement.

**14.** Analyseur selon la revendication 13, **caractérisé en ce que** le guide de rayonnement est un prisme ou une fibre optique en verre.

**15.** Analyseur selon la revendication 13 ou 14, **caractérisé en ce que** l'analyseur de rayonnement est un monochromateur d'émission.

**16.** Analyseur selon l'une des revendications précédentes, **caractérisé en ce que** les molécules émettrices de signaux sont des molécules actives du point de vue biologique.

**17.** Analyseur selon l'une des revendications précédentes, **caractérisé en ce que** les molécules émettrices de signaux et actives du point de vue biologique sont des protéines aptes à rayonner qui peuvent réagir à des ligands.

**18.** Analyseur selon l'une des revendications précédentes, **caractérisé en ce que** le côté, dirigé vers l'intérieur de la chambre d'échantillons, de la paroi de chambre d'échantillons en matériau transparent au rayonnement est doté d'un revêtement qui favorise le couplage ou la liaison des molécules aptes à rayonner et qui peut agir de façon spécifique.

**19.** Procédé de détermination de l'épaisseur d'une couche de liquide extra mince, **caractérisé en ce que** l'on établit une couche de liquide extra mince sur la surface de mesure en amenant un fluide non miscible dans le flux de liquide d'un fluorogène fluorescent qui n'adsorbe pas les solides et les liquides au niveau de la surface limite et on émet un rayonnement sur cette profondeur de pénétration supérieure à une onde lumineuse évanescente jusqu'à ce que l'on obtienne un signal de mesure, par exemple une réduction mesurable du signal de fluorescence, en introduisant l'onde évanescente à l'intérieur du fluide non fluorescent.

**20.** Procédé d'analyse d'un liquide pour rechercher une substance contenue dans une couche de liquide extrêmement mince du liquide dans une chambre d'analyse d'échantillons, **caractérisé en ce que** l'on divise le flux de liquide à faire passer dans la chambre d'analyse d'échantillons en segments de flux volumique en amenant le flux de liquide avant l'entrée dans la chambre d'analyse d'échantillons à travers un fluide non miscible avec le liquide, puis on amène les segments de flux volumique segmentés dans la chambre d'analyse d'échantillons et enfin on analyse les segments de flux volumique dans la chambre d'analyse pour rechercher la substance qui s'est accumulée au niveau de la couche limite de la couche de liquide extrêmement mince entre le liquide et la phase solide ou entre le fluide et le liquide.

**21.** Procédé selon l'une des revendications 19 à 20, **caractérisé en ce que** le fluide non miscible avec le liquide du flux de liquide est un gaz ou un liquide non miscible.

**22.** Procédé selon l'une des revendications 19 à 21, **caractérisé en ce que** l'on amène le flux de liquide en direction de la chambre d'analyse d'échantillons via un clapet à deux voies comportant une amenée de flux de liquide et de fluide non miscible avec la solution tampon et une sortie commune, une commutation étant effectuée au niveau du clapet à deux voies de façon intermittente à des intervalles de temps entre les deux positions d'amenée pendant l'analyse de flux de liquide dans la chambre d'analyse d'échantillons.

**23.** Procédé selon l'une des revendications 19 à 22, **caractérisé en ce que** le flux de liquide, qui génère des forces de cisaillement et qui déplace la couche de liquide extrêmement mince, générée à l'aide du fluide, sur la surface en direction de l'écoulement, est arrêté pour effectuer la mesure de la substance contenue dans le liquide ou pour effectuer la détermination de l'épaisseur de la couche de liquide.

**24.** Procédé selon l'une des revendications 19 à 23, **caractérisé en ce que** l'on inverse le sens du flux de liquide destiné à la mesure de la substance contenue dans le liquide ou de l'épaisseur de la couche.

**25.** Procédé selon l'une des revendications 19 à 24, **caractérisé en ce que** la température est modifiée par saut pour effectuer la mesure de la substance contenue dans le liquide.

**26.** Procédé de détermination des constantes de vitesse d'adsorption, de désorption ou de réaction de molécules émettrices de signaux sur des surfaces en utilisant l'analyseur selon l'une des revendications 1 à 18, lequel procédé comporte les étapes suivantes consistant à :

a) faire passer une solution tampon à travers la chambre d'échantillons de l'analyseur ;
b) introduire la solution tampon à analyser dans la chambre d'échantillons par l'ouverture d'injection ;
c) solliciter le prisme optique avec une lumière monochromatique suivant un angle critique d'environ 70° ;
d) mesurer l'intensité de la lumière fluorescente générée au niveau de la couche limite entre la plaque de quartz et la chambre d'échantillons et sortant sensiblement perpendiculairement à la plaque de quartz et entrant dans le monochromateur d'émission,

un fluide de 1000 μl maximum, non miscible avec la solution d'échantillons, étant introduit dans la conduite d'amenée avant d'introduire la solution tampon dans la chambre d'échantillons.

27. Procédé selon la revendication 26, **caractérisé en ce que** le fluide est introduit sous la forme d'une bulle d'air dans la chambre d'échantillons.

1

2

3

4

5

6

7

8

zu analysierende
Probe

voranströmender
Puffer

Fig. 1

Fig. 2

Fig. 3

Fig. 4

Fig. 5

Fig. 6